# EUROPEAN PATENT SPECIFICATION

(11) **EP 3 138 380 B1**
(45) Date of publication and mention of the grant of the patent: **05.08.2020**
(21) Application number: 16186344.4
(22) Date of filing: 30.08.2016
(51) Int. Cl.: A01D 46/24, A01D 46/30, A01D 45/00

(54) **HARVESTING DEVICE**
ERNTEVORRICHTUNG
DISPOSITIF DE RÉCOLTE

(30) Priority: 07.09.2015 JP 2015175729
(43) Date of publication of application: 08.03.2017
(73) Proprietor: Panasonic Corporation, Kadoma-shi Osaka 571-8501 (JP)
(72) Inventor: MIZUNO, Osamu, Osaka-shi, Osaka 540-6207 (JP); KANEDA, Masaaki, Osaka-shi, Osaka 540-6207 (JP); KAWANO, Hajime, Osaka-shi, Osaka 540-6207 (JP)
(74) Representative: Vigand, Philippe

(56) References cited:
- DE-U1- 8 702 168
- US-A- 1 070 204
- US-A- 4 531 352
- US-A- 5 083 418

## Description

### TECHNICAL FIELD

The present disclosure relates to a harvesting device which harvests a target, such as fruit.

### BACKGROUND ART

It is desirable to automate harvesting work of a crop.

In the recent years, as a device which performs automatic harvesting, for example, a harvesting device described in PTL 1 is known. Fig. 1 is a schematic configuration view of the harvesting device disclosed in PTL 1. The harvesting device disclosed in PTL 1 includes connection pipe 94 which is connected to vacuum pad 95 that adsorbs fruit, and is linked to a vacuum suction device which is not illustrated, and motor 93 which rotates and vibrates vacuum pad 95. The harvesting device adsorbs fruit 90 by vacuum pad 95, rotates and vibrates vacuum pad 95, and detaches fruit 90 grown on branch 92 from branch 92 by abscission layer 91.

### Citation List

### Patent Literature

PTL 1: Japanese Patent Unexamined Publication No. 63-141517
PTL2 : US Patent No. 5,083,418

However, in the harvesting device in PTL 1, since a part of the surface of the fruit is vacuum-suctioned, damage, such as a remaining mark made by suctioning the fruit, is caused.

Further, PTL 2 discloses a hand operated fruit picker, having the features of a harvesting device according to the preamble of claim 1.

### SUMMARY OF THE INVENTION

An object of the disclosure is to provide a harvesting device which suppresses generation of damage and harvests a target.

According to an aspect of the disclosure, there is provided a harvesting device including: an upper harvesting ring having a ring part through which a target is inserted; a lower harvesting ring which has a ring part through which the target is inserted, and is disposed below the upper harvesting ring; and a driving mechanism which changes a relative position of the upper harvesting ring and the lower harvesting ring in a state where a part of the target is inserted through the upper harvesting ring and the lower harvesting ring. In addition, the driving mechanism moves the upper harvesting ring in a direction away from a plant on which the target is grown, or moves the lower harvesting ring in a direction forward the plant.

According to the disclosure, it is possible to suppress generation of damage, and to harvest the target.

### DESCRIPTION OF DRAWINGS

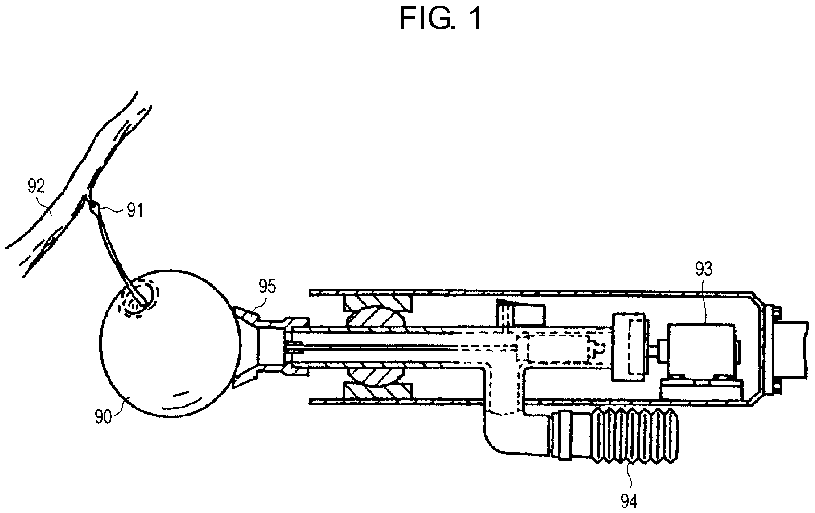

FIG. 1 is a schematic configuration view of a harvesting device in the related art;
FIG. 2 is a perspective view illustrating appearance of the harvesting device according to the embodiment of the disclosure;
FIG. 3 is a perspective view illustrating appearance only of a pulling-in member illustrated in FIG. 2;
FIG. 4 is a perspective view illustrating a state of the harvesting device in a case where a pulling-in member driver illustrated in FIG. 2 retreats the most;
FIG. 5 is a perspective view illustrating appearance of an upper harvesting ring illustrated in FIG. 2;
FIG. 6 is a perspective view illustrating appearance of a lower harvesting ring illustrated in FIG. 2;
FIG. 7 is a perspective view illustrating appearance when the harvesting device illustrated in FIG. 2 viewed from an opposite side;
FIG. 8 is a view illustrating a cluster of fruit which is a target of harvesting;
FIG. 9 is a flowchart illustrating an operation order of the harvesting device for more reliably separating the fruit in an abscission layer;
FIG. 10 is a view illustrating an operation of the harvesting device;
FIG. 11 is a view illustrating an operation of the harvesting device;
FIG. 12 is a view illustrating an operation of the harvesting device;
FIG. 13 is a view illustrating an operation of the harvesting device;
FIG. 14 is a view illustrating an operation of the harvesting device;
FIG. 15 is a view illustrating an operation of the harvesting device;
FIG. 16 is a view illustrating an operation of the harvesting device;
FIG. 17 is a view illustrating an operation of the harvesting device;
FIG. 18 is a view illustrating an operation of the harvesting device;
FIG. 19 is a flowchart illustrating an order of realizing rotational vibration of a harvesting mechanism;
FIGS. 20A to 20D are views illustrating phases of vibration in the upward-and-downward direction and in the forward-and-rearward direction, which are components of the rotational vibration; and
FIG. 21 is a perspective view illustrating appearance of a pulling-in member according to a modification example.

### DETAILED DESCRIPTION OF THE PREFERRED EMBODIMENTS

Hereinafter, embodiments of the disclosure will be described in detail with reference to the drawings.

In the technology disclosed in PTL 1, a force of pulling, screwing, or bending of a harvesting device acts not only in abscission layer 91, but also in the entire range across a supporter of branch 92 from fruit 90. Therefore, in a case where fruit 90 has a stalk similar to tomato, fruit 90 is not limited to being separated in abscission layer 91, and there is a possibility that fruit 90 is separated at the stalk. There is also a case where a commercial value of fruit 90, such as tomato, of which the stalk is separated deteriorates from the aesthetic viewpoint of color, and from the viewpoint of difficulty of confirming the freshness. In addition, in a case where fruit 90 is unlikely to be separated in abscission layer 91, an unnecessary force acts on branch 92 or the like, and damage of branch 92 or the like and the supporter thereof is caused. Here, a harvesting device which can solve the problem will be described.

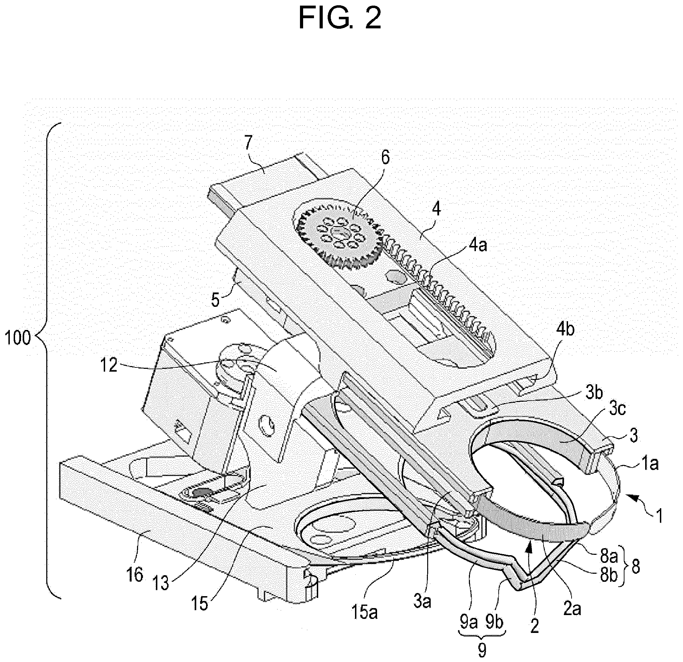

FIG. 2 is a perspective view illustrating appearance of harvesting device 100 according to the embodiment of the disclosure. In FIG. 2, harvesting device 100 includes a mechanism (that is, pulling-in members 1 and 2 or the like) for pulling in the fruit, such as tomato, to harvesting device 100, a harvesting mechanism (upper harvesting ring 8 or lower harvesting ring 9) for separating the fruit not at the stalk but in the abscission layer, and a control device (not illustrated). The control device performs control of various operations of harvesting device 100.

In the following description, the upward-and-downward direction is the direction parallel to the gravity, the downward direction is the orientation in which the gravity of the earth pulls the fruit or the like, and the upward direction is the direction opposite to the downward direction. In addition, the forward-and-rearward direction is the direction of approaching and being separated from the fruit when viewed from harvesting device 100, the forward direction is the direction in which harvesting device 100 approaches the fruit, and the rearward direction is the direction in which harvesting device 100 is separated from the fruit.

The harvesting target of harvesting device 100 is fruit or the like grown on the branch. More specifically, the harvesting target is fruit having a peduncle or an abscission layer. Examples of the fruit include strawberry, blueberry, or raspberry in addition to the tomato.

In many cases, the plurality of fruits are concentrated and grown on the branch. Here, harvesting device 100 includes pulling-in members 1 and 2 as mechanisms of attracting only a specific fruit to harvesting device 100 side in order to harvest only desired fruit.

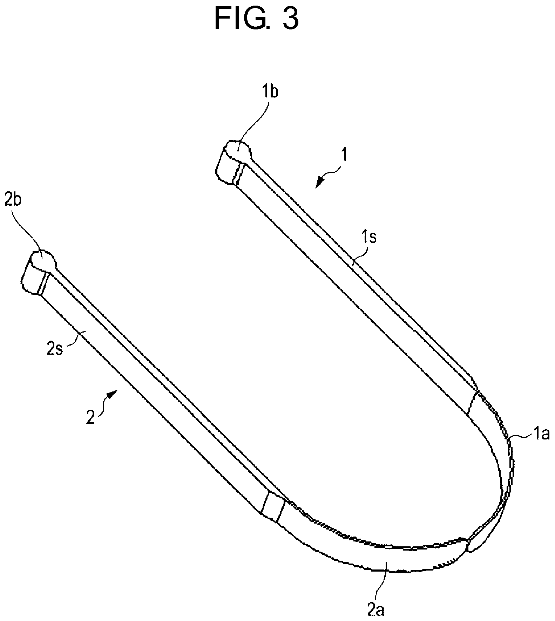

FIG. 3 is a perspective view illustrating appearance of only pulling-in members 1 and 2 illustrated in FIG. 2.

Pulling-in members 1 and 2 are elastic members, include straight parts 1s and 2s having a shape of a rectangular parallelepiped, arcs 1a and 2a provided at one end of straight parts 1s and 2s, and fixing ends 1b and 2b provided at the other end of straight parts 1s and 2s, and respectively make a J shape. Pulling-in members 1 and 2 are made as a pair, and are disposed in a U shape. In addition, in pulling-in members 1 and 2, only arcs 1a and 2a may be elastic members.

FIG. 2 will be referred again. Pulling-in member holder 3 has groove structures 3a having a shape of a straight line on both sides. Groove structure 3a holds pulling-in members 1 and 2 to be slidable, elastically deforms arcs 1a and 2a of pulling-in members 1 and 2, and accommodates pulling-in members 1 and 2 or makes pulling-in members 1 and 2 protrude.

Pulling-in member driver 4 is a structure which holds fixing ends 1b and 2b of pulling-in members 1 and 2, and drives pulling-in members 1 and 2. In addition, rack 4a is formed at a part of the center of pulling-in member driver 4. In addition, pulling-in member driver 4 has recess 4b.

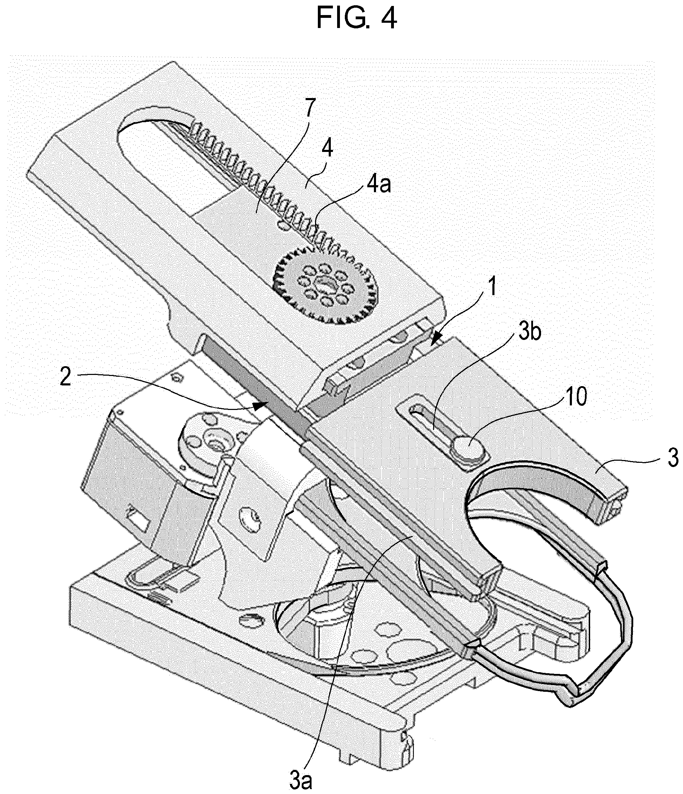

Driver guide 7 holds pulling-in member driver 4 to freely linearly move via recess 4b of pulling-in member driver 4. As illustrated in FIG. 4, pulling-in member holder 3 is supported on a surface of driver guide 7 by pin 10, and can linearly move within an allowable range of pin groove 3b.

Pulling-in motor 5 is loaded on driver guide 7. Pinion 6 is connected to a rotating shaft of pulling-in motor 5, and pinion 6 is engaged with rack 4a. Here, when pulling-in motor 5 rotates, pinion 6 rotates, and pulling-in member driver 4 linearly moves with respect to driver guide 7. Pulling-in member driver 4 is driven by the driving mechanisms, and according to this, arcs 1a and 2a of one pair of pulling-in members 1 and 2 can pull in the desired fruit in the direction of being separated from the branch.

As illustrated in FIG. 4, in a case where pulling-in member driver 4 retreats the most, arcs 1a and 2a of pulling-in members 1 and 2 are elastically deformed, have a shape of a substantially flat plate, and are accommodated in groove structure 3a. As illustrated in FIG. 2, in a case where pulling-in member driver 4 advances the most, arcs 1a and 2a of pulling-in members 1 and 2 elastically recover in a shape of an arc which is in a free state, and tip ends thereof approach each other.

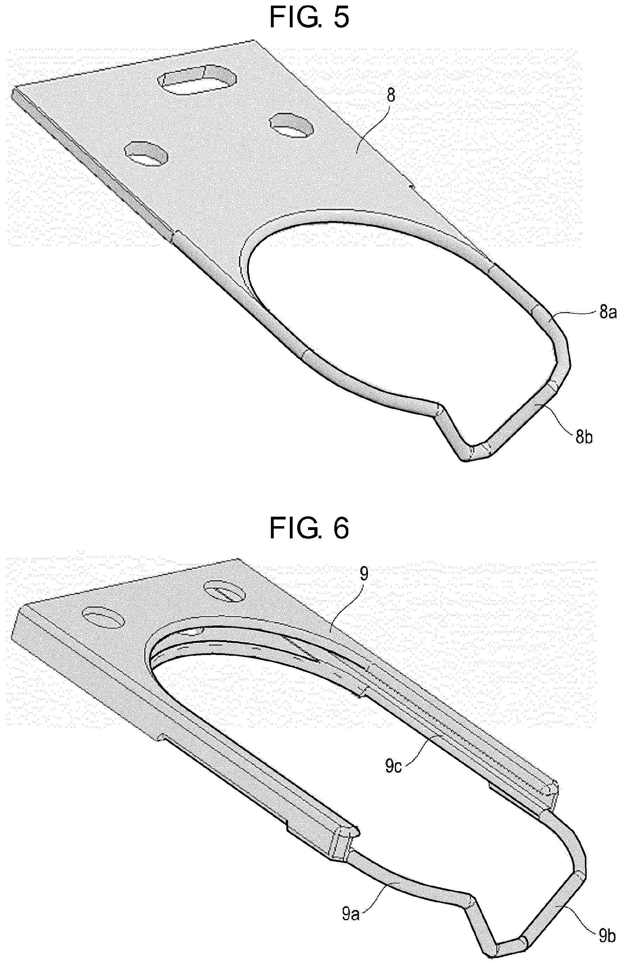

Upper harvesting ring 8 (refer to FIG. 5), and lower harvesting ring 9 (refer to FIG. 6) disposed perpendicularly below upper harvesting ring 8, are mechanisms for harvesting the desired fruit which has already been pulled in by pulling-in members 1 and 2.

Any of upper harvesting ring 8 and lower harvesting ring 9 has arcs 8a and 9a (corresponds to ring parts) formed in a shape of a substantially semicircular arc. The fruit is inserted into arcs 8a and 9a on the inner sides thereof, and a part of arcs 8a and 9a has V grooves 8b and 9b. V grooves 8b and 9b are recesses which are recessed toward the lower side, and in a state where upper harvesting ring 8 overlaps the upper side of lower harvesting ring 9, V groove 8b is fitted to V groove 9b. In lower harvesting ring 9, as illustrated in FIG. 6, guide groove 9c is integrally formed. Lower harvesting ring 9 holds upper harvesting ring 8 to be linearly slidable along guide groove 9c.

In addition, there are a center shaft which passes through the center of a circle having arc 8a of upper harvesting ring 8 as a part thereof perpendicularly to the circle, and a center shaft which passes through the center of a circle having arc 9a of lower harvesting ring 9 as a part thereof perpendicularly to the circle. The center shafts are connected by combining member 12 between driver guide 7 and lower harvesting ring 9 to be substantially parallel to the center shaft which passes through the center of a circle having arc-shaped recess 3c of pulling-in member holder 3 as a part thereof perpendicularly to the circle.

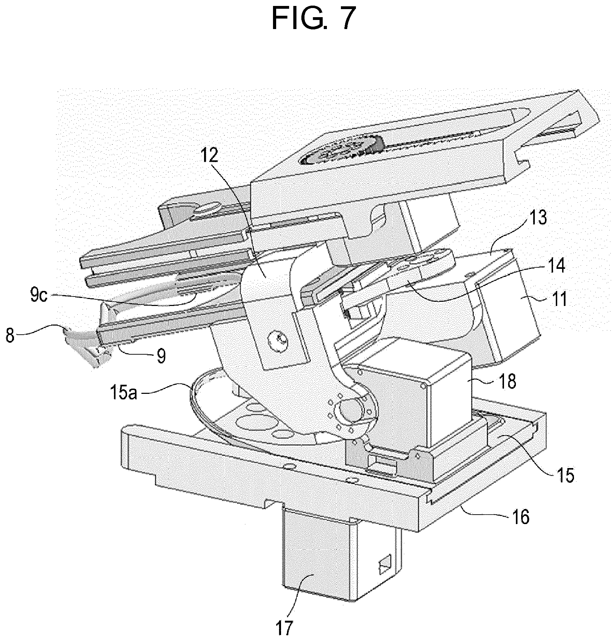

FIG. 7 is a perspective view illustrating appearance when harvesting device 100 of FIG. 2 is viewed from the opposite side. Separating and cutting motor 11 is fixed to lower harvesting ring 9 via motor holder 13. The rotating shaft of separating and cutting motor 11 is connected to upper harvesting ring 8 via arm 14. Here, when separating and cutting motor 11 rotates, arm 14 drives upper harvesting ring 8 to move along guide groove 9c (refer to FIG. 6). In other words, separating and cutting motor 11 relatively moves upper harvesting ring 8 and lower harvesting ring 9.

Base 16 holds slide base 15 to be freely linearly moved. Ring-shaped trap ring 15a is provided at the tip end of slide base 15.

In slide motor 17, a stator is fixed to base 16, and slide motor 17 drives slide base 15 with respect to base 16, for example, by an arm (not illustrated). The stator of pitch motor 18 is fixed to slide base 15, and a rotor of pitch motor 18 is combined with motor holder 13. Pitch motor 18 can drive motor holder 13 in the so-called pitching direction with respect to slide base 15, and can move the tip end of upper harvesting ring 8 or the like relatively in the upward-and-downward direction with respect to base 16. Accordingly, upper harvesting ring 8 and lower harvesting ring 9 can adjust the distance to the desired fruit.

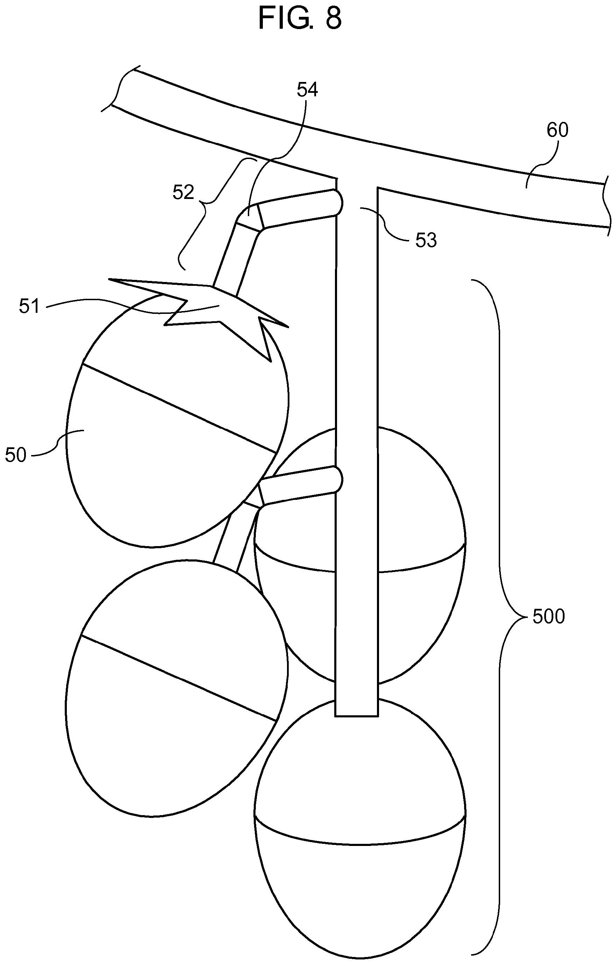

The cluster of the fruit which is the target to be harvested is illustrated in FIG. 8. Here, tomato is illustrated as an example of the fruit. In FIG. 8, some stalks are omitted.

In cluster 500 branched from main stem 60 which is an example of the branch, a plurality of fruits are grown in the periphery of peduncles 53. Fruit 50 has stalk 51, and stalk 51 is linked to peduncle 53 via small peduncle 52. The upper part of peduncle 53 is further linked to main stem 60. In addition, cluster 500 is suspended by self weight or the like from main stem 60.

Abscission layer 54 is a special cell layer formed between the branch and the axis of the fruit, and is a part which is positioned in the middle of small peduncle 52, and can be comparatively easily separated by a pulling force or the like. In addition, between fruit 50 and peduncle 53, in addition to abscission layer 54, as a part which is likely to be separated, there is a boundary between stalk 51 and fruit 50. Therefore, in a case where fruit 50 is simply pulled, there is a case of being separated in abscission layer 54, and a case of being separated in stalk 51.

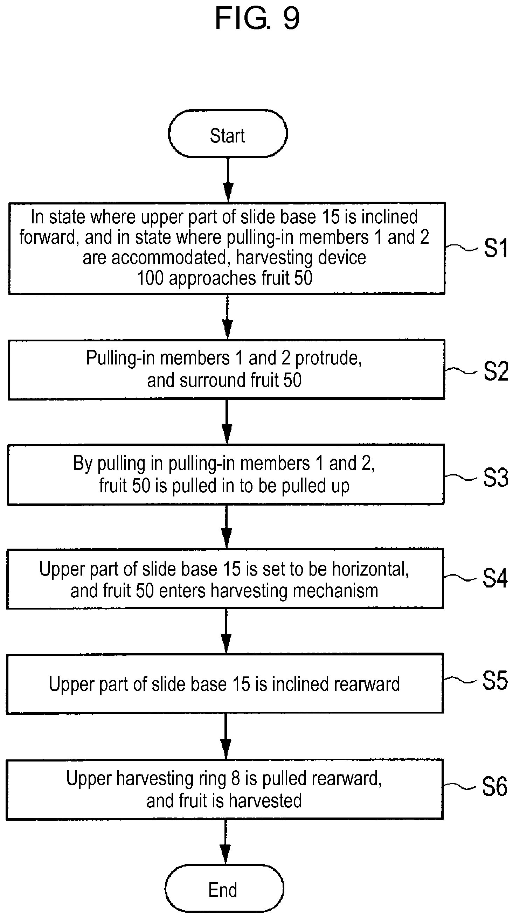

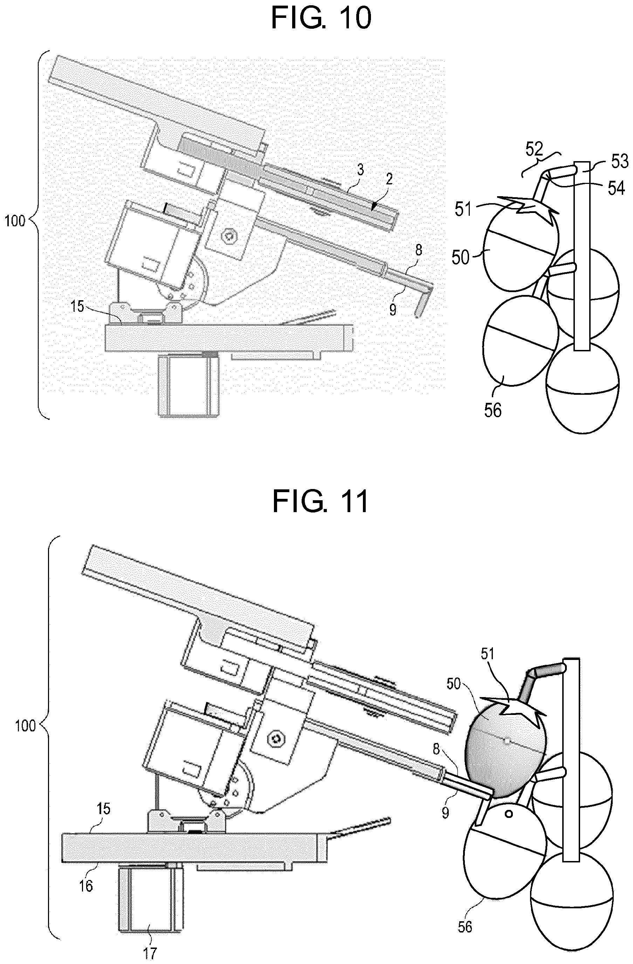

Next, an operation of harvesting device 100 for more reliably separating fruit 50 in abscission layer 54 will be described by using FIG. 9. FIGS. 10 to 18 are also views illustrating the operation of harvesting device 100, and the operation will be described appropriately with reference to FIGS. 10 to 18. The desired fruit is fruit 50.

First, harvesting device 100 performs processes of steps S1 to S3 which are processing for making is possible to harvest only fruit 50 among cluster 500 of the fruit grown to be concentrated before the process of harvesting fruit 50.

In step S1 of FIG. 9, as illustrated in FIG. 10, the harvesting mechanism (that is, upper harvesting ring 8 and lower harvesting ring 9) of harvesting device 100 in a state where an upper part of slide base 15 is inclined forward, positions harvesting device 100 to go between fruit 50 and fruit 56 below fruit 50. At this time, arcs 1a and 2a of pulling-in members 1 and 2 illustrated in FIG. 2 or the like are accommodated in pulling-in member holder 3. In addition, as illustrated in FIG. 11, the position of harvesting device 100 is adjusted so that the harvesting mechanism becomes in a state of being between fruit 50 and fruit 56 below fruit 50.

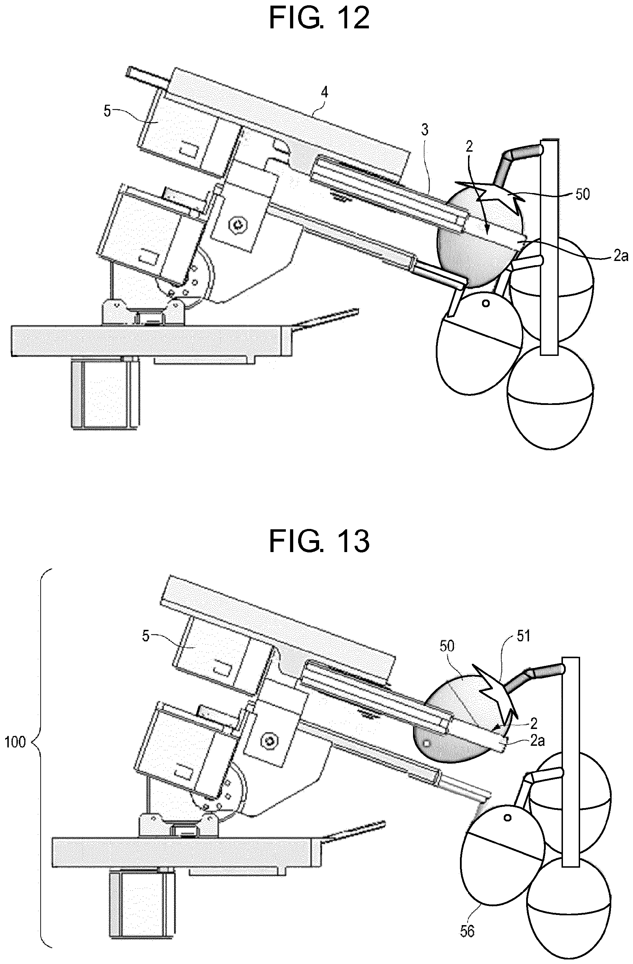

In step S2, by driving pulling-in motor 5 in a positive rotation, as illustrated in FIG. 12, harvesting device 100 pushes out pulling-in member driver 4 to the branch side of fruit 50. Accordingly, harvesting device 100 makes pulling-in members 1 and 2 protrude to the branch side of fruit 50, and arcs 1a and 2a surround fruit 50.

In step S3, by driving pulling-in motor 5 in a reverse rotation, as illustrated in FIG. 13, harvesting device 100 moves pulling-in members 1 and 2 to the side separated from the branch of fruit 50, and pulls in fruit 50 toward harvesting device 100 side. More specifically, harvesting device 100 pulls in the lower end of fruit 50 to pull up the lower end in the diagonal direction. Accordingly, a void is formed between desired fruit 50 and fruit 56 on the lower side. Here, in order to prevent stalk 51 from being separated from fruit 50 by pulling pulling-in members 1 and 2, a pulling-in amount is set to, for example, approximately 1/4 to 1/2 of the diameter of fruit 50. In addition, while one pair of pulling-in members 1 and 2 are pulled in fruit 50, the tip ends of pulling-in members 1 and 2 are separated from each other. As described above, this is because arcs 1a and 2a of pulling-in members 1 and 2 are elastic members.

Steps S1 to S3 described above have contents of a pulling-in process performed before harvesting only desired fruit 50 from the cluster of the fruit grown to be concentrated.

Harvesting device 100 performs the process of steps S4 to S6 which are harvesting processes after the pulling-in process.

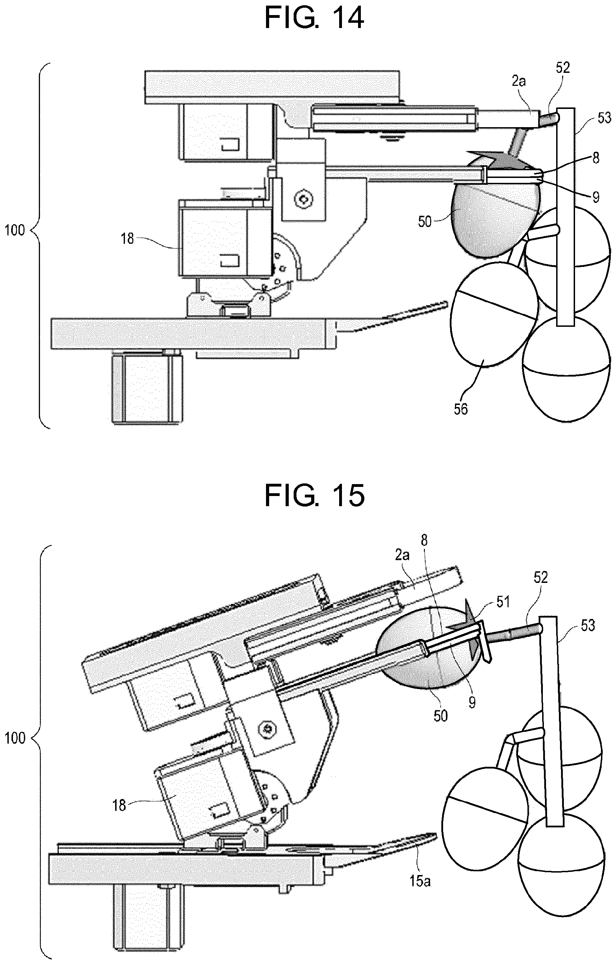

In step S4, as illustrated in FIG. 14, harvesting device 100 drives pitch motor 18 in a reverse rotation, and sets the upper part of slide base 15 inclined forward to be horizontal. In addition, harvesting device 100 inserts upper harvesting ring 8 and lower harvesting ring 9 which are the harvesting mechanisms into between peduncle 53 and fruit 50. At this time, following the raise of arcs 1a and 2a, there is a possibility that arcs 1a and 2a come into contact with small peduncle 52 or peduncle 53 of fruit 50. However, since arcs 1a and 2a are elastic members and are easily deformed, damage is not transferred to small peduncle 52 or peduncle 53.

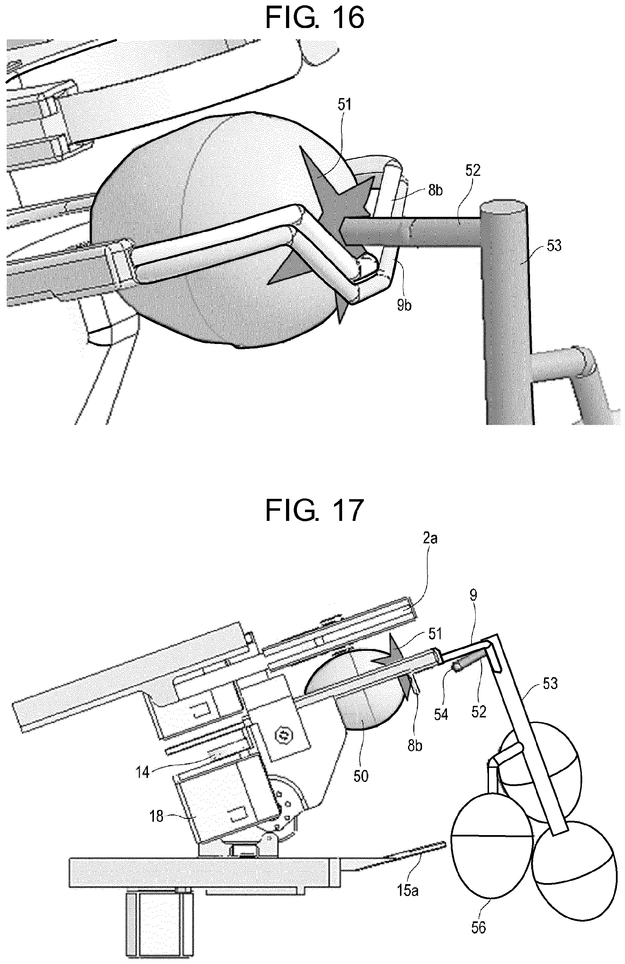

In step S5, harvesting device 100 more reversely rotates pitch motor 18 from the state of FIG. 14, and as illustrated in FIG. 15, the upper part of slide base 15 is inclined rearward, and the longitudinal direction of upper harvesting ring 8 and the longitudinal direction of lower harvesting ring 9 are substantially parallel to the center line which passes through the upper end and the lower end of fruit 50. Accordingly, the harvesting mechanism reaches small peduncle 52 of fruit 50, and as a result, as illustrated in FIG. 16, V grooves 8b and 9b are inserted into between peduncle 53 and stalk 51.

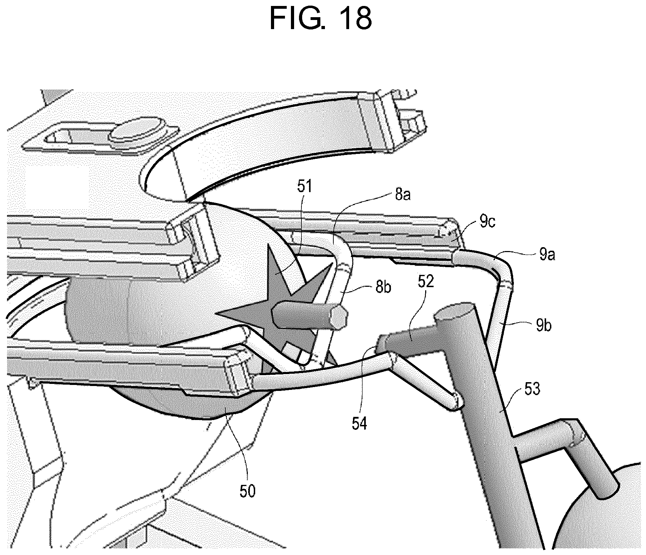

In step S6, when harvesting device 100 drives separating and cutting motor 11, as illustrated in FIG. 17, upper harvesting ring 8 is pulled in along guide groove 9c (refer to FIG. 6) by arm 14. As a result, upper harvesting ring 8 is pulled in the direction (rearward) of separating fruit 50 including stalk 51 from peduncle 53. As fruit 50 is pulled, peduncle 53 is also attracted via small peduncle 52, but peduncle 53 and lower harvesting ring 9 come into contact with each other, and a force of pressing peduncle 53 to lower harvesting ring 9 is generated as a reaction of the pulling force of upper harvesting ring 8. At this time, since V groove 8b is in contact with stalk 51 of fruit 50, the pulling force of separating V groove 8b and stalk 51 acts between stalk 51 and peduncle 53, and as illustrated in FIGS. 17 and 18, small peduncle 52 is separated in abscission layer 54. At this time, since the pulling force of separating V groove 8b and stalk 51 does not act between fruit 50 and stalk 51, stalk 51 is not separated from fruit 50. In addition, in the harvesting process, since it is possible to prevent harvesting device 100 from being directly touched by fruit 50, it is possible to prevent damage of fruit 50 from being generated.

In addition, by disposing upper harvesting ring 8 and lower harvesting ring 9 to overlap each other, and in particular, by disposing V grooves 8b and 9b to be fitted to each other, in the separating process of step S6, it is possible to reduce rotational moment which acts on fruit 50 with respect to peduncle 53. Accordingly, it is possible to prevent fruit 50 from being disengaged from lower harvesting ring 9 due to the rotation. Additionally, the pulling force can efficiently act on abscission layer 54, and there is rarely a case where the separation occurs in locations other than abscission layer 54.

In addition, the void between upper harvesting ring 8 and lower harvesting ring 9 includes a void of V grooves 8b and 9b, and there is also a possibility of nipping a stalk or the like of other fruits when the void is extremely small. Therefore, for example, the void is set to be approximately 0.3 mm to 1 mm.

Steps S4 to S6 described above have contents of the harvesting process.

After this, harvested fruit 50 with stalk 51 is dropped, and passes through trap ring 15a of FIG. 2. In a case where harvesting device 100 functions as a harvesting system, it is desirable that a container or the like for collecting harvested fruit 50 is disposed below trap ring 15a.

In the embodiment, lower harvesting ring 9 is fixed and upper harvesting ring 8 is moved. However, the disclosure is not limited thereto. In other words, upper harvesting ring 8 and lower harvesting ring 9 may be relatively moved, and for example, upper harvesting ring 8 may be fixed and lower harvesting ring 9 may be moved. In addition, both of upper harvesting ring 8 and lower harvesting ring 9 may be moved together. In this configuration, as illustrated in FIG. 17, even in a case where another fruit 56 comes into contact with trap ring 15a, upper harvesting ring 8 and lower harvesting ring 9 can protrude in the direction (the direction of the branch) of the right side on a paper surface of FIG. 17. As a result, the insertion of upper harvesting ring 8 and lower harvesting ring 9 into fruit 50 becomes easy, and when upper harvesting ring 8 is attracted to the left side (the direction opposite to the branch) of the left side on a paper surface of FIG. 17 relatively to lower harvesting ring 9, trap ring 15a can pass through fruit 50.

In addition, as upper harvesting ring 8 and lower harvesting ring 9 have the configuration, the pulling force more reliably acts on abscission layer 54, and deterioration of a commercial value, for example, stalk 51 being taken or generation of damage, is difficult to occur.

In addition, in a case where the diameter of fruit 50 to be a target is relatively large, even when V grooves 8b and 9b are not provided, a sufficient pulling force can act. However, in order to more reliably separate fruit 50 around abscission layer 54, it is desirable to form V grooves 8b and 9b.

In addition, in harvesting device 100 according to the embodiment, slide motor 17 or pitch motor 18 is provided and the posture or the position is set with respect to the fruit, but an appropriate manipulator arm may realize the functions thereof.

In the above-described embodiment, an example in which the target which is fruit 50 is grown on the branch is illustrated, but fruit grown on a plant may be a target and be harvested. In this case, the driving mechanism may move lower harvesting ring 9 in the direction of the plant on which the target is grown, or may move upper harvesting ring 8 in the direction of being separated from the plant on which the target is grown.

Here, in a harvesting method of the above-described embodiment, in some cases, there is a problem in resistance, such as friction, when inserting upper harvesting ring 8 and lower harvesting ring 9 between the fruit and fruit in a concentrated state. Here, a method of easily changing a frictional force between the ring and fruit 50 to a kinetic frictional state and inserting upper harvesting ring 8 and lower harvesting ring 9, by vibrating upper harvesting ring 8 and lower harvesting ring 9, and a method of reducing a normal force, will be described.

In this case, a specific method of making the kinetic frictional state, an eccentric motor or the like for the vibration is mounted on a part of lower harvesting ring 9. By matching a rotation frequency of the eccentric motor and a primary resonance frequency of mechanical vibration system of harvesting device 100, an amplitude can be efficiently obtained. In addition, by the mounting method of the eccentric motor, the upward-and-downward and forward-and-rearward vibration directions can be obtained.

Harvesting device 100 provided with the eccentric motor pulls in one of the plurality of fruits grown on the branch as the desired fruit in the direction of being separated from the branch using pulling-in members 1 and 2, and inserts the harvesting mechanism (that is, upper harvesting ring 8 and lower harvesting ring 9) to the lower side of the pulled-in fruit. At this time, by inserting the harvesting mechanism while vibrating the harvesting mechanism, harvesting device 100 can solve the above-described friction problem, and can accurately harvest only the desired fruit.

In addition, by setting the vibration to be in a state of complex wave, while pushing up only the desired fruit, harvesting device 100 can smoothly insert the harvesting mechanism to the lower side of the desired fruit. Therefore, harvesting device 100 introduces the rotational vibration combined with the vibration in the upward-and-downward direction and in the forward-and-rearward direction. In the rotational vibration, the vibration frequencies in the upward-and-downward direction and in the forward-and-rearward direction of the vibration are the same as each other, and the phase is shifted by 90 degrees.

In harvesting device 100, in the step of vibrating the harvesting mechanism, a first process in which the tip end of the harvesting mechanism is displaced in the direction (that is, the direction opposite to the direction of being separated from the branch) of approaching the branch at the same time when the tip end of the harvesting mechanism is displaced in the downward direction is provided. In addition, in harvesting device 100, in the step of vibrating the harvesting mechanism, a second process in which the tip end of the harvesting mechanism is displaced in the direction of being separated from the branch at the same time when the tip end of the harvesting mechanism is displaced in the upward direction is provided. In the first process, harvesting device 100 inserts the harvesting mechanism to the lower side of the desired fruit, and in the second process, harvesting device 100 pulls in the desired fruit in the direction of being separated from the branch.

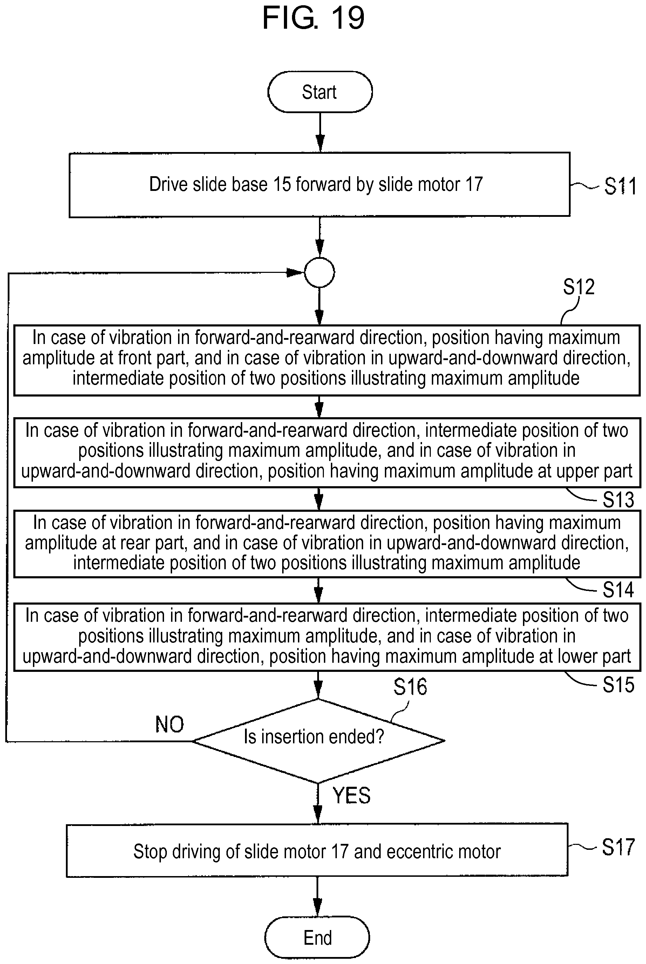

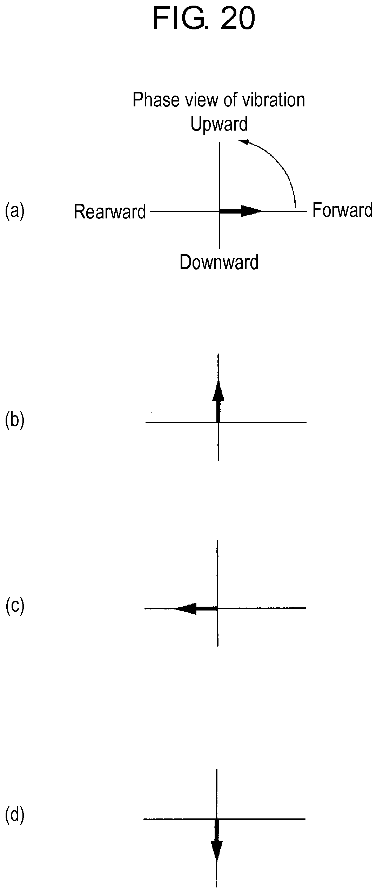

FIG. 19 is a flowchart illustrating an order of realizing the rotational vibration of the harvesting mechanism. FIG. 20 is a view illustrating phases of the vibration in the upward-and-downward direction and in the forward-and-rearward direction which are components of the rotational vibration. Thick arrows in the phase view of FIG. 20 illustrate the direction in which the tip end of upper harvesting ring 8 is displaced. Hereinafter, the order of realizing the rotational vibration of the harvesting mechanism will be described in detail by using FIGS. 19 and 20.

As an initial state before performing the rotational vibration, the positional relationship between the harvesting mechanism of harvesting device 100 and fruit 50 is set to be the state of FIG. 11, and the vibration is started from the state. In step S11, harvesting device 100 drives slide base 15 forward by slide motor 17.

In step S12, in harvesting device 100, with respect to the vibration of the tip end of the harvesting mechanism in the forward-and-rearward direction, the eccentric motor is driven so that the position of the tip end of the harvesting mechanism becomes the position having the maximum amplitude at the front part, and the rotational vibration is started at the tip end of the harvesting mechanism. At this time, with respect to the vibration in the upward-and-downward direction, the position of the tip end of the harvesting mechanism is an intermediate position of two positions illustrating the maximum amplitude in the upward-and-downward direction.

In steps S12 and S13, as illustrated in FIGS. 20A and 20B, harvesting device 100 transmits the displacement in the upward orientation while pulling the tip end of the harvesting mechanism later. Accordingly, the harvesting mechanism pushes up fruit 50, the frictional force therebetween increases, and fruit 50 is pulled later.

In step S13, with respect to the vibration of the tip end of the harvesting mechanism in the forward-and-rearward direction, the position of the tip end of the harvesting mechanism becomes the intermediate position of two positions illustrating the maximum amplitude in the forward-and-rearward direction. With respect to the vibration in the upward-and-downward direction, the position of the tip end of the harvesting mechanism becomes the position having the maximum amplitude at the upper part. Therefore, the frictional force becomes the maximum, and fruit 50 is pulled in to the device side by a stronger force.

In step S14, with respect to the vibration of the tip end of the harvesting mechanism in the forward-and-rearward direction, the rotation is performed so that the position of the tip end of the harvesting mechanism becomes the position having the maximum amplitude at the rear part, and with respect to the vibration of the tip end of the harvesting mechanism in the upward-and-downward direction, the rotation is performed so that the position of the tip end of the harvesting mechanism becomes the intermediate position of two positions illustrating the maximum amplitude in the upward-and-downward direction. Accordingly, fruit 50 is further attracted to the device side.

In steps S14 and S15, as illustrated in FIGS. 20C and 20D, harvesting device 100 transmits the displacement in the downward orientation while moving the tip end of the harvesting mechanism forward. Accordingly, the harvesting mechanism is displaced to be separated in the downward direction of fruit 50, and the frictional force of the harvesting mechanism and fruit 50 deteriorates. At the same time, since the harvesting mechanism moves forward with respect to fruit 50, the harvesting mechanism is displaced to slide to relatively front part. In other words, while frictional force deteriorates, the harvesting mechanism is inserted below fruit 50 only as much as being correlated with the amplitude of the vibration.

In step S15, with respect to the vibration of the tip end of the harvesting mechanism in the forward-and-rearward direction, the position of the tip end of the harvesting mechanism becomes the intermediate position of two positions illustrating the maximum amplitude in the forward-and-rearward direction. With respect to the vibration of the tip end of the harvesting mechanism in the upward-and-downward direction, the position of the tip end of the harvesting mechanism becomes the position having the maximum amplitude at the lower part. Accordingly, the harvesting mechanism is likely to be inserted below fruit 50.

In this manner, until the insertion of the harvesting mechanism is ended (step S16: NO), steps S12 to S15 are repeated.

When the insertion of the harvesting mechanism is ended (step S16: YES), in step S17, harvesting device 100 stops the driving of slide motor 17 and the eccentric motor.

In addition, since slide motor 17 drives slide base 15 forward at the same time of the vibration, in a case where the frictional force is large, fruit 50 is pulled later, and in a case where the frictional force is small, the harvesting mechanism is inserted into between fruit 50 and other fruits 56.

In addition, regarding the frequency of the vibration by the eccentric motor, it has been already described that the efficiency is excellent when matching the frequency to the mechanical vibration system. However, in a case where the forward-and-rearward direction is the longitudinal direction in harvesting device 100 as illustrated in FIG. 2, the vibration frequency is likely to deteriorate in the direction orthogonal to the longitudinal direction. In other words, since the vibration frequency in the upward-and-downward direction decreases relatively to the forward-and-rearward direction, and the amplitude increases, the vibration in the upward-and-downward direction is likely to occur, and fruit 50 is likely to be pulled in.

In this manner, since the vibration frequencies in the forward-and-rearward direction and in the upward-and-downward direction generally do not match each other, in a case where the driving is performed by one motor, the trace of the tip end of the thick arrows becomes elliptical in the phase view of FIG. 20. Meanwhile, when the phase view is close to a perfect circle, fruit 50 is more likely to be pulled in. In addition, in order to make the phase view close to a perfect circle, it is effective to match the resonance frequencies in the forward-and-rearward direction and in the upward-and-downward direction each other. Specifically, in addition to the eccentric motor, by connecting a spring which vibrates in the forward-and-rearward direction to the rear part thereof, the resonance frequencies in the forward-and-rearward direction and in the upward-and-downward direction can match each other.

In addition, the vibration may be realized by one motor. In addition, it is also possible to generate the vibration in which the resonance frequencies in each direction match each other using two motors, and in this case, it is possible to obtain larger vibration with respect to each frequency.

### Modification Example

Here, a modification example of the pulling-in member will be described.

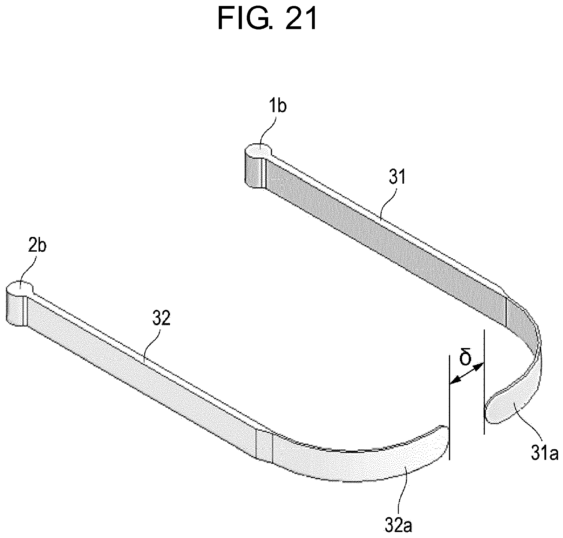

FIG. 21 is a perspective view illustrating appearance of pulling-in members 31 and 32 according to the modification example. In a free state (when starting the pulling-in) of arcs 31a and 32a, void δ is provided at the tip end of arcs 31a and 32a. By providing void δ, there is an effect that only fruit 50 is much more easily pulled in while avoiding small peduncle 52 or peduncle 53 in FIGS. 14 to 17. The minimum value of void δ is greater than a dimension of the peduncle, and the maximum value is smaller than the dimension of the fruit which is the target. In the example of the cluster of tomatoes, void δ is approximately 5 to 10 mm.

In addition, by loading harvesting device 100 to a manipulator arm installed in a moving carriage, a harvesting system can also be constructed. By the system, the moving carriage moves in a farm, and the targets are automatically harvested.

In addition, in each of the above-described embodiments, upper harvesting ring 8 and lower harvesting ring 9 are described as rings including arcs 8a and 9a having a shape of a substantially semicircular arc but the disclosure is not limited thereto. For example, the arcs of upper harvesting ring 8 and lower harvesting ring 9 may not form a part of a circle, and may form a part of an ellipse or a part of a polygon.

### INDUSTRIAL APPLICABILITY

The harvesting device of the disclosure can be employed in harvesting various types of fruits.

## Claims

1. A harvesting device (100) to harvest a target (50) growing on a plant, the harvesting device (100) comprising:
an upper harvesting ring (8) which has a ring part (8a) adapted for a part of the target (50) to be inserted through;
a lower harvesting ring (9) which has a ring part (9a) adapted for a part of the target (50) to be inserted through, and is disposed below the upper harvesting ring (8); and
a driving mechanism (11) adapted to change a relative position of the upper harvesting ring (8) and the lower harvesting ring (9),
**characterized in that** the harvesting device (100) is configured so that, when a target (50) is harvested by said harvesting device (100), in a state where a part of the target (50) is inserted through the upper harvesting ring (8) and the lower harvesting ring (9), the driving mechanism (11) is arranged to move the upper harvesting ring (8) in a direction away from a plant on which the target (50) is grown, or is arranged to move the lower harvesting ring (9) in a direction toward the plant, so that the lower harvesting ring (9) comes into contact with a peduncle (53) of said plant.

2. The harvesting device of Claim 1,
wherein each of the upper harvesting ring (8) and the lower harvesting ring (9) has a recess at a tip end of the ring part.

3. The harvesting device of Claim 2,
wherein the recess of the upper harvesting ring (8) is configured to be fittable to the recess of the lower harvesting ring (9).

4. The harvesting device of Claim 1, further comprising:
one pair of pulling-in members (1,2) disposed above the upper harvesting ring (8),
wherein the one pair of pulling-in members pulls in the target (50) in the direction away from the plant before the driving mechanism (11) is driven.

5. The harvesting device of Claim 4,
wherein the one pair of pulling-in members (1,2) is an elastic member.

6. The harvesting device of Claim 4,
wherein, while the one pair of pulling-in members (1,2) pull in the target (50), tip ends of the one pair of pulling-in members (1,2) are separated from each other.

7. The harvesting device of Claim 6,
wherein a void between the tip ends of the one pair of pulling-in members (1,2) when starting the pulling, is configured to be smaller than a dimension of the target (50), and greater than a dimension of a peduncle (53) of the plant.

8. The harvesting device of Claim 1,
wherein the target (50) is configured to be tomato.

## Patentansprüche

1. Erntevorrichtung (100) zum Ernten eines Ziels (50), das an einer Pflanze wächst, wobei die Erntevorrichtung (100) Folgendes umfasst:
einen oberen Erntering (8), der einen Ringteil (8a) aufweist, der angepasst ist, dass ein Teil des Ziels (50) dadurch eingesetzt wird;
einen unteren Erntering (9), der einen Ringteil (9a) aufweist, der angepasst ist, dass ein Teil des Ziels (50) dadurch eingesetzt wird, und unter dem oberen Erntering (8) angeordnet ist; und
einen Antriebsmechanismus (11), der angepasst ist, eine relative Position des oberen Ernterings (8) und des unteren Ernterings (9) zu ändern,
**dadurch gekennzeichnet, dass** die Erntevorrichtung (100) derart ausgelegt ist, dass, wenn ein Ziel (50) von der Erntevorrichtung (100) in einem Zustand geerntet wird, in dem ein Teil des Ziels (50) durch den oberen Erntering (8) und den unteren Erntering (9) eingesetzt ist, der Antriebsmechanismus (11) angeordnet ist, den oberen Erntering (8) in eine Richtung von der Pflanze, an der das Ziel (50) wächst, weg zu bewegen, oder angeordnet ist, den unteren Erntering (9) in eine Richtung zur Pflanze zu bewegen, derart, dass der untere Erntering (9) mit einem Stiel (53) der Pflanze in Kontakt kommt.

2. Erntevorrichtung nach Anspruch 1,
wobei jeder des oberen Ernterings (8) und des unteren Ernterings (9) an einem Spitzenende des Ringteils eine Ausnehmung aufweist.

3. Erntevorrichtung nach Anspruch 2,
wobei die Ausnehmung des oberen Ernterings (8) dazu ausgelegt ist, von der Ausnehmung des unteren Ernterings (9) aufnehmbar zu sein.

4. Erntevorrichtung nach Anspruch 1, die ferner Folgendes umfasst:
ein Paar von Einziehelementen (1, 2), die über dem oberen Erntering (8) angeordnet sind, wobei das eine Paar von Einziehelementen das Ziel (50) in die Richtung von der Pflanze weg zieht, bevor der Antriebsmechanismus (11) angetrieben wird.

5. Erntevorrichtung nach Anspruch 4,
wobei das eine Paar von Einziehelementen (1, 2) ein elastisches Element ist.

6. Erntevorrichtung nach Anspruch 4,
wobei Spitzenenden des einen Paares von Einziehelementen (1, 2) voneinander getrennt werden, während das Paar von Einziehelementen (1, 2) die Ziele (50) einziehen.

7. Erntevorrichtung nach Anspruch 6,
wobei ein Hohlraum zwischen den Spitzenenden des einen Paares von Einziehelementen (1, 2) beim Starten des Ziehens dazu ausgelegt ist, kleiner als eine Abmessung des Ziels (50) und größer als eine Abmessung eines Stiels (53) der Pflanze zu sein.

8. Erntevorrichtung nach Anspruch 1,
wobei das Ziel (50) dazu ausgelegt ist, eine Tomate zu sein.

## Revendications

1. Dispositif de récolte (100) pour récolter une cible (50) se développant sur une plante, le dispositif de récolte (100) comprenant :
un anneau de récolte supérieur (8) qui a une partie d'anneau (8a) adaptée pour qu'une partie de la cible (50) y soit insérée ;
un anneau de récolte inférieur (9) qui a une partie d'anneau (9a) adaptée pour qu'une partie de la cible (50) y soit insérée, et est disposé au-dessous de l'anneau de récolte supérieur (8) ; et
un mécanisme d'entraînement (11) adapté pour modifier une position relative de l'anneau de récolte supérieur (8) et de l'anneau de récolte inférieur (9),
**caractérisé en ce que** le dispositif de récolte (100) est configuré de sorte que, lorsqu'une cible (50) est récoltée par ledit dispositif de récolte (100), dans un état dans lequel une partie de la cible (50) est insérée à travers l'anneau de récolte supérieur (8) et l'anneau de récolte inférieur (9), le mécanisme d'entraînement (11) est agencé pour déplacer l'anneau de récolte supérieur (8) dans une direction à distance d'une plante sur laquelle la cible (50) se développe, ou est agencé pour déplacer l'anneau de récolte inférieur (9) dans une direction vers la plante, de sorte que l'anneau de récolte inférieur (9) vient en contact avec un pédoncule (53) de ladite plante.

2. Dispositif de récolte selon la revendication 1,
dans lequel chacun parmi l'anneau de récolte supérieur (8) et l'anneau de récolte inférieur (9) a un évidement au niveau d'une extrémité de pointe de la partie d'anneau.

3. Dispositif de récolte selon la revendication 2,
dans lequel l'évidement de l'anneau de récolte supérieur (8) est configuré pour pouvoir être monté sur l'évidement de l'anneau de récolte inférieur (9).

4. Dispositif de récolte selon la revendication 1, comprenant en outre :
une paire d'éléments de traction (1, 2) disposés au-dessus de l'anneau de récolte supérieur (8),
dans lequel la une paire d'éléments de traction tire la cible (50) dans une direction à distance de la plante avant que le mécanisme d'entraînement (11) ne soit entraîné.

5. Dispositif de récolte selon la revendication 4,
dans lequel la une paire d'éléments de traction (1, 2) est un élément élastique.

6. Dispositif de récolte selon la revendication 4,
dans lequel, alors que la une paire d'éléments de traction (1, 2) tire la cible (50), les extrémités de pointe de la une paire d'éléments de traction (1, 2) sont séparées l'une de l'autre.

7. Dispositif de récolte selon la revendication 6,
dans lequel un vide entre les extrémités de pointe de la une paire d'éléments de traction (1, 2) lors du déclenchement de la traction, est configuré pour être inférieur à une dimension de la cible (50), et supérieur à une dimension d'un pédoncule (53) de la plante.

8. Dispositif de récolte selon la revendication 1,
dans lequel la cible (50) est configurée pour être une tomate.
